# FASCICULE DE BREVET EUROPEEN

(11) **EP 4 347 249 B1**
(45) Date de publication et mention de la délivrance du brevet: **07.05.2025**
(21) Numéro de dépôt: 22717867.0
(22) Date de dépôt: 28.03.2022
(51) Int. Cl.: B32B 7/12, B32B 27/08, B32B 27/22, B32B 27/30, B32B 27/36

(54) **FILM SOUPLE SENSIBLEMENT TRANSPARENT ET SON PROCEDE DE FABRICATION**
IM WESENTLICHEN TRANSPARENTE FLEXIBLE FOLIE UND VERFAHREN ZUR HERSTELLUNG DAVON
SUBSTANTIALLY TRANSPARENT FLEXIBLE FILM AND METHOD FOR PRODUCING SAME

(30) Priorité: 02.06.2021 FR 2105826
(43) Date de publication de la demande: 10.04.2024
(73) Titulaire: Serge Ferrari SAS, 38110 Saint Jean de Soudain (FR)
(72) Inventeur: MONIER, Thomas, 73000 BARBERAZ (FR)
(74) Mandataire: Cabinet Laurent & Charras
(86) Numéro de dépôt international: PCT/FR2022/050577
(87) Numéro de publication internationale: WO 2022/254102

(56) Documents cités:
- US-A- 4 978 579
- US-B1- 6 238 772

## Description

### Domaine de l'invention

L'invention concerne le domaine des films souples sensiblement transparents à la lumière visible, à base de matériaux polymères. L'invention vise plus particulièrement un film sensiblement transparent et présentant une bonne aptitude au vieillissement, souple, enroulable, destiné à remplacer une paroi rigide de verre typiquement au sein d'une structure modulaire, et présentant une bonne résistance au feu et aux UV, ainsi qu'un faible retrait à la chaleur, un faible allongement sous charge, et une forte résistance à la traction.

### Etat antérieur de la technique

On connaît des films souples ou rigides en matériau polymère destinés à remplacer une paroi de verre dans une structure modulaire en assurant la fonction de transmission du rayonnement lumineux. Ces films sont tout particulièrement adaptés pour des structures modulaires telles que des tentes événementielles, voire pour des stores ou des pergolas. Ils peuvent avantageusement comprendre du poly(chlorure de vinyle) (PVC) sensiblement transparent. Par exemple, le document US 6.238.772.81 décrit un film souple multicouche transparent à base de PVC.

Cependant, ces films présentent de nombreux inconvénients, notamment par leur relative fragilité mécanique, l'allongement sous charge et/ou la retrait à la chaleur étant trop important(s), Cela pose un problème de perte d'esthétique de la structure, par exemple le film se déformant lors du soudage lorsqu'il est assemblé par haute fréquence. De plus, les normes au feu, de plus en plus restrictives pour ces structures, sont difficilement respectées.

Ainsi, un premier objectif de l'invention est de réaliser un film souple sensiblement transparent, enroulable, présentant une bonne résistance au feu, aux UV, et à l'abrasion, ainsi qu'un faible retrait à la chaleur et un faible allongement sous charge.

Par ailleurs, les films souples sensiblement transparents en PVC présentent un problème de résistance aux UV sur la durée (ou aptitude au vieillissement), en particulier par perte de transparence au fil du temps en se colorant sensiblement (jaunissement), ce qui est rédhibitoire d'un point de vue commercial.

Ainsi, un second objectif de l'invention est de pouvoir réaliser des films souples sensiblement transparents ne perdant pas leur transparence sur une certaine période de temps (quelques mois, typiquement 1 à 2 ans).

Il n'existe donc pas de solution satisfaisante à l'heure actuelle permettant de pallier les problèmes de la technique antérieure. Un besoin subsiste de disposer d'un film sensiblement transparent, souple enroulable, et présentant une bonne résistance au feu et à l'abrasion, ainsi qu'un faible retrait à la chaleur et un faible allongement sous charge, tout en présentant une bonne résistance aux UV.

L'invention consiste à pallier les problèmes de l'état de la technique, en proposant un film souple sensiblement transparent, ainsi qu'un procédé de fabrication d'un tel film.

### Exposé de l'invention

Selon un premier aspect, l'invention concerne un film souple multicouche sensiblement transparent, comprenant une couche de polyester (ou PET) intercalée entre deux couches de Poly(chlorure de vinyle) (PVC) (2) ignifugées, ledit film (1) étant caractérisé en ce que chaque couche de PVC (2) comprend de 25 à 45% de plastifiant, en poids par rapport à son poids total (c'est-à-dire en poids par rapport au poids total de la couche PVC), ledit plastifiant comprenant du phosphate, le taux de phosphore étant compris entre 0,3 et 1,0%, de préférence entre 0,4 et 0,8%, de façon encore plus préférée entre 0,5 et 0,7%, en poids par rapport au poids total de film souple.

Par « couche de PVC ignifugée », on entend que le film en PVC formant couche au sein du film selon l'invention comprend du PVC, du plastifiant et sensiblement aucune charge minérale. Par « charge minérale », on entend selon l'invention un constituant minéral tel que kaolinite, talc, calcite, micas, baryte, silice, granulat ou oxyde d'antimoine.

De préférence, le polyester est le polyéthylène téréphtalate.

Ainsi, qu'il sera expliqué ci-après, la couche de PET comporte une couche issue d'une couche de fonctionnalisation sur chacune de ses faces. Après assemblage du film souple multicouche, cette couche de fonctionnalisation est composée de ce qu'est devenu ce polymère, qui a permis l'adhésion.

Selon un mode de réalisation préférée, le phosphate comprend au moins un cycle aromatique.

Selon un mode de réalisation, chaque couche de PVC présente une épaisseur moyenne comprise entre 100 et 400 µm, de préférence entre 150 et 300 µm.

Selon un mode de réalisation, la couche de PET dans le film souple multicouche (hors couche issue de la couche de fonctionnalisation) présente une épaisseur moyenne comprise entre 5 et 100 µm, de préférence entre 10 et 80 µm.

Ainsi, le film souple sensiblement transparent selon l'invention présente en général une épaisseur moyenne de 205 à 900 µm, de préférence de 310 à 660 µm.

Par « compris entre X et Y » ou « de Z à T », on entend selon l'invention bornes incluses.

Selon un mode de réalisation préféré, le plastifiant est choisi parmi l'octyl diphenyl phosphate, le 2-éthylhexyl diphényl phosphate (par exemple le produit commercial Santicizer^{®} 141 de la société Valtris), le triphenyl phosphate, l'isopropylphényl diphényl phosphate, le 2-isopropyl-5-méthylcyclohexyl diphényl phosphite, et leurs mélanges.

Selon un mode de réalisation particulier, le plastifiant comprend en outre au moins un phosphate linéaire comportant du chlore, de préférence choisi parmi le tris(2-chloroethyl) phosphate, le tris(1-chloro-2-propyl) phosphate, le tris(3-chloropropyl) phosphate et leurs mélanges. Un tel composé est par exemple le tris(2-chloroethyl) phosphate.

Par « phosphate linéaire comprenant du chlore », on entend selon l'invention un composé comprenant au moins un groupe phosphate linéaire, c'est-à-dire non ramifié, et au moins du chlore.

Selon un mode de réalisation préféré, le plastifiant comprend en outre au moins un composé choisi parmi le dioctyl adipate (DOA), le phtalate de diisononyle (DINP), disponible par exemple auprès des sociétés BASF et Exxon, le diisodécyl phtalate (DIDP), le dioctyltéréphtalate (DOTP), le di(2-propylheptyl) phtalate (DPHP), l'acide dicarboxylique de 1,2-cyclohexane (DINCH), le tris(2-éthylhexyl) trimellitate (TOTM), les plastifiants biosourcés (tel que le produit du commerce Polysorb^{®} ID37 de la société Roquette), et leurs mélanges.

Par « plastifiant biosourcé » on entend généralement un plastifiant d'origine renouvelable et non fossile.

De préférence selon l'invention, au moins une couche de PVC comprend de 30 à 45% de plastifiant, en poids par rapport à son poids total.

De façon particulièrement préférée selon l'invention, les deux couches de PVC sont semblables. Par « semblable » on entend selon l'invention de même nature et de même épaisseur. Ainsi, de préférence selon l'invention, chaque couche de PVC comprend de 30 à 45% de plastifiant, en poids par rapport à son poids total.

Les propriétés du **film sensiblement transparent selon l'invention** sont mesurées comme il est connu de la personne du métier et ainsi qu'expliqué ci-après.

La transparence est mesurée par la transmission normale ainsi que la transmission hémisphérique (norme EN 410). Selon l'invention, un film est « sensiblement transparent » si les valeurs obtenues de chacune de la 'transmission visible normale' normale et de la "transmission visible normale' hémisphérique est supérieure à 80%, de préférence comprise entre 85% et 100%, la transmission visible diffuse devant être inférieure à 10%.

La résistance à la traction est mesurée par la norme ISO 1421 :2016 (version 2016 en vigueur) une éprouvette de 5cm de large est tirée sur un banc de traction (dynamomètre) jusqu'à la rupture. La valeur mesurée est la valeur de résistance maximale atteinte avant rupture. La valeur obtenue doit être comprise entre 10 et 30 daN/5cm.

L'allongement sous charge est mesuré par la norme EN 15977 : 2011 (version 2011 en vigueur). Une éprouvette de 50mm de large sur laquelle deux repères linéaires ont été tracés à une distance de 200mm est suspendue pendant 24h à un poids de 10kg. On mesure après 24h l'allongement sous charge puis on décroche l'éprouvette, on la laisse reposer une heure puis on mesure de nouveau l'allongement résiduel. La valeur d'allongement obtenue doit être comprise entre 10 et 20% sous charge et entre 5 et 10% en résiduel.

Le retrait à chaud est mesuré par la norme DIN 53377 :2015-04 (version 2015) une éprouvette de 25mm de largeur et de 300mm de longueur sur laquelle on a tracé deux repères linéaires distants de 200mm est placée dans une étuve à 80°C pendant 10min. A la sortie de l'étuve on mesure le retrait en température du film dans les conditions (80°C, 10min). La valeur obtenue doit être comprise entre 0 et -1% en sens travers comme en sens machine.

La résistance au feu est mesurée par la norme ISO 13501-1 de septembre 2007 (test SBI ou Euroclasse). Le produit doit en premier lieu répondre à la norme EN ISO 11925-2 de Mars 2020 (« Essais de réaction au feu - Allumabilité de produits soumis à l'incidence directe de la flamme - Partie 2 : Essai à l'aide d'une source à flamme unique » ou « Euroclasse petite flamme »). Lors de ce premier test, la hauteur de flamme doit être inférieure à 150mm pour réaliser le deuxième test, qui est le test SBI de la norme ISO 13501-1. Le résultat de ce deuxième test doit être B-s2-d0.

Le test de vieillissement aux UV est mesuré par la norme ASTM G154-4 (QUV) à une durée égale à 875h. La valeur mesurée est le changement de couleur de la matière par rapport à l'échantillon initial selon l'échelle des gris (selon la norme ISO 105-A03). Le résultat de ce test doit être égal à 5, 4-5 ou 4, de préférence 5 et 4-5

Selon un deuxième aspect, l'invention concerne un procédé de fabrication d'un film souple multicouche sensiblement transparent selon l'invention, comprenant les étapes successives suivantes :
(a) assemblage de trois films formant couches, un film en polyester (PET), présentant une couche de fonctionnalisation sur chacune de ses deux faces, étant intercalé entre deux films en Poly(chlorure de vinyle) (PVC) ignifugés ;
(b) chauffage de cet assemblage à une température comprise entre 130°C et 190°C-;
(c) calandrage (4) de l'assemblage des trois films chauffés, le pression de calandrage étant comprise entre 10 et 30.10⁵ Pa ;
(d) refroidissement du film souple multicouche issu de l'étape (c).

De préférence, l'étape (b) se produit à une température comprise entre 150°C et 175°C.

De préférence, l'étape (c) se produit à une pression comprise entre 15 et 25. 10⁵ Pa.

La couche de fonctionnalisation comprend au moins un polymère, qui est de préférence un polyester ou un copolymère de polyester. La couche de fonctionnalisation n'a pas forcément la même épaisseur en tout point. Avantageusement, cette couche de fonctionnalisation permet l'adhésion du film en PET sur le film en PVC.

Une fois le film souple multicouche sensiblement transparent fabriqué, le chauffage et le calandrage des étapes respectives (b) et (c) peuvent avoir transformé le polymère de la couche de fonctionnalisation, ce qui le rend plus difficile à détecter et caractériser. La couche de fonctionnalisation s'est donc ainsi transformée en une couche issue d'une couche de fonctionnalisation.

La couche de fonctionnalisation est d'épaisseur moyenne typiquement de 0,1 à 5 µm, par exemple environ 2 µm. La couche de fonctionnalisation n'a pas forcément la même épaisseur en tout point.

Les propriétés du **film PET** utilisé dans le procédé de l'invention sont de préférence celle explicitées ci-après. Elles sont mesurées ainsi qu'il est connu de la personne du métier.

La résistance à la traction est mesurée par la norme ISO 527-1 :2019 (version 2019 en vigueur). La valeur obtenue doit être comprise entre 220 et 250 MPa.

L'allongement à la rupture est mesuré par les normes ISO 527-1 :2019 (version 2019 en vigueur) et ISO 527-3 :2018 (version 2018 en vigueur). La valeur obtenue doit être comprise entre 110 et 130%.

Le retrait à chaud est mesurée par la norme DIN 40634-2 :2015-04 (version 1969) dans les conditions (150°C, 15min). La valeur obtenue doit être comprise entre 0,2 et 1,6%.

Les propriétés **de chaque film PVC formant couche** utilisée dans le procédé de l'invention sont de préférence celles explicitées ci-après. Elles sont mesurées ainsi qu'il est connu de la personne du métier.

La résistance à la traction est mesurée par la norme ASTM D882-02. La valeur obtenue doit être comprise entre 25 et 30 MPa.

L'allongement à la rupture est mesuré par les normes ASTM D882-02. La valeur obtenue doit être comprise entre 240 et 280%.

Le retrait à chaud est mesurée par la norme DIN 53377 :2015-04 (version 2015) une éprouvette de 25mm de largeur et de 300mm de longueur sur laquelle on a tracé deux repères linéaires distants de 200mm est placée dans une étuve à 80°C pendant 10min. 0 la sortie de l'étuve on mesure le retrait en température du film dans les conditions (80°C, 10min). La valeur obtenue doit être comprise entre 1 et -3% en sens travers comme en sens machine.

La résistance au feu est mesurée par la norme NF P92-503 de février 2004, classement M par le test au bruleur électrique et à la flamme pilote. L'éprouvette est soumise au rayonnement d'un bruleur électrique à 600°C puis à intervalles réguliers à une flamme pilote. Durant le test, la présence ou l'absence de gouttes ou de chutes (enflammées ou non) est observée. A la fin du test la longueur dégradée par les flammes de l'éprouvette est mesurée. Pour qualifier le film, le test est effectué sur 8 éprouvettes. Le résultat est bon si au moins 50% des éprouvettes présente une longueur dégradée inférieure à 350 mm, et pas de chutes de gouttes ou de particules enflammées.

Selon un troisième aspect, l'invention concerne une structure modulaire comprenant au moins une paroi dans laquelle un film multicouche selon l'invention est au moins partiellement voire totalement présent. Dans un tel cas, un tel film sert de passage des rayons lumineux dans la paroi. Une telle structure modulaire peut ainsi être une tente événementielle, mais peut aussi constituer un auvent, une pergola, ou un store.

### Description sommaire de la figure

La manière de réaliser l'invention, ainsi que les avantages qui en découlent, ressortent de la description du mode de réalisation qui suit, à l'appui de la figure annexée :

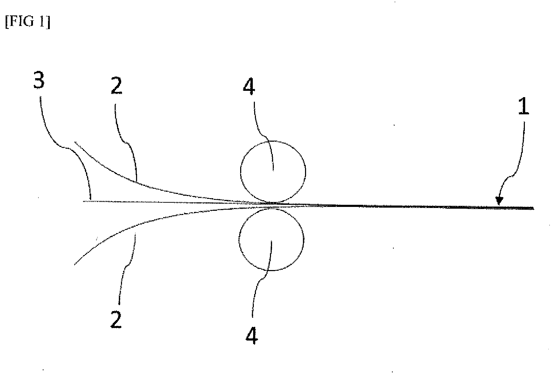

[Fig. 1] La figure 1 est une vue schématique d'un procédé de fabrication d'un film souple sensiblement transparent selon l'invention.

Bien entendu, les dimensions et les proportions des éléments illustrés à la figure 1 ont pu être exagérées par rapport à la réalité, et n'ont été données que dans le but de faciliter la compréhension de l'invention.

### Description détaillée de la figure

La fabrication en continu du film **1** selon l'invention, représenté sur la figure 1, comprend un assemblage d'un film en PET **3** placé entre deux films, ici semblables, en PVC ignifugé **2,** un chauffage, puis un calandrage par des rouleaux **4** de calandrage sous pression.

### EXEMPLES

Trois différents films souples transparents tricouches destinés à servir de fenêtre dans une tente événementielle, un selon l'invention (exemple 1) et deux comparatifs (exemples N°2 et N°3), ont été fabriqués selon le procédé représenté sur la figure 1. Ces films présentaient les caractéristiques préférées selon l'invention pour les films PET et PVC.

En ce qui concerne ces trois exemples, les deux couches PVC entourant la couche PET (en polyéthylène téréphtalate) intermédiaire étaient semblables.

Le chauffage a été de 160°C, et la pression de calandrage a été de 25 bars (1 bar = 10⁵ Pa). Dans chaque cas, un refroidissement contrôlé a permis de gérer la non-cristallisation du PVC pour garder la transparence.

Les propriétés de deux films souples transparents monocouches PVC ont été testées à titre comparatif (exemples comparatifs N°4 et N°5).

Les natures et épaisseurs des films testés étaient les suivantes:

| Film | Couche supérieure en PVC (destinée à être en contact avec l'extérieur) | Couche intermédiaire PET | Couche inférieure en PVC (destinée à être en contact avec l'intérieur) | Taux de plastifiant dans la couche PVC | Premier composé plastifiant : taux, nature | Second composé plastifiant le cas échéant : taux, nature | Taux de phosphore du film |
|---|---|---|---|---|---|---|---|
| N°1 selon l'invention | Film PVC 200µm | PET | Film PVC 200µm | 39% | 39,9% phosphate avec cycle aromatique | 60,1%, DINP | 0,62% |
| N°2 comparatif | Film 300µm | PET | Film 300µm | 37% | 69,5% phosphate avec cycle aromatique | 30,5%, DOTP | 1,48% |
| N°3 comparatif | Film PVC 260µm | PET | Film PVC 260µm | 40% | 100% DINP | | 0% |
| N°4 Comparatif | Film PVC 500µm | sans | sans | 40% | 100% DINP | | 0% |
| N°5 Comparatif | Film PVC 500 µm | sans | sans | 40% | 60,8% phosphate avec cycle aromatique | 39,2%, DINP | 1,38% |

Il a également été procédé à un essai de fabrication de film souple multicouche avec deux films PVC semblables de 200µm d'épaisseur et un film PET (polyéthylène téréphtalate) d'intercalation de 15 µm d'épaisseur. Ces films présentaient les caractéristiques préférées selon l'invention pour les films PET et PVC, mais le film PET n'était pas fonctionnalisé. Il n'a pas été possible de réaliser un film souple multicouche à cause d'un défaut d'adhésion entre les films PET et PVC.

Les propriétés obtenues pour les films des exemples N°1 à 5 sont les suivantes, selon les tests normés décrits ci-avant :

| Film | Couche supérieure en PVC (destinée à être en contact avec l'extérieur) | Couche intermédiaire PET | Couche inférieure en PVC (destinée à être en contact avec l'intérieur) | Résistance au feu (succès au test SBI) | Allongement sous charge (Sous charge, résiduel après 24h) (%) | Retrait à chaud (sens travers/ sens machine) (%) | Vieillissement UV (QUV 875h) (Cotation échelle des gris) |
|---|---|---|---|---|---|---|---|
| N°1 selon l'invention | Film PVC 200µm | PET | Film PVC 200µm | oui | 14%, 9% | -0,6/-0,3 | 4/5 |
| N°2 comparatif | Film 300µm | PET | Film 300µm | oui | 14%, 9% | -0,6/-0,3 | 2 |
| N°3 comparatif | Film PVC 260µm | PET | Film PVC 260µm | non | 14%, 9% | -0,6/-0,3 | 4/5 |
| N°4 comparatif | Film PVC 500µm | sans | sans | non | 70%, 4% | Non connu /-1,4 | 4/5 |
| N°5 comparatif | Film PVC 500 µm | sans | sans | oui | 92%, 8% | +1/-3 | 1/2 |

Ainsi, les exemples comparatifs N°3 et N°4 ne passent pas respectivement le test de résistance au feu et le test du vieillissement. D'autre part, les exemples comparatifs N°4 et N°5 ne passent pas respectivement le test d'allongement sous charge et les tests d'allongement sous charge et de vieillissement.

Le film N°1 selon l'invention et le film N°2 comparatif présentaient les valeurs suivantes de transmission (%) :

| Film | Transmission visible normale normale (%) | Transmission visible normale hémisphérique (%) | Transmission diffuse (%) |
|---|---|---|---|
| N° 1 (invention) avant vieillissement | 84 | 87 | 3 |
| N° 1 (invention) après vieillissement | 83 | 87 | 4 |
| N° 2 (comparatif) avant vieillissement | 87 | 89 | 2 |
| N° 2 (comparatif) après vieillissement | 77 | 81 | 4 |

Le film N°1 selon l'invention est resté transparent après vieillissement, alors que le film comparatif N°2 a perdu sa transparence après vieillissement.

Les résultats des tests pour les 5 exemples sont résumés ci-après.

| Film | Propriété Feu | Propriété d'allongement | Propriété de retrait à chaud | Propriété de transparence | Propriété de vieillissement |
|---|---|---|---|---|---|
| N°1 selon l'invention | OK | OK | OK | OK | OK |
| N°2 comparatif | OK | OK | OK | OK | NOK |
| N°3 comparatif | NOK | NOK | OK | OK | OK |
| N°4 Comparatif | NOK | NOK | OK | OK | OK |
| N°5 Comparatif | OK | NOK | NOK | OK | NOK |

Où : OK signifie que le test est passé avec succès et NOK signifie que le test n'est pas passé avec succès.

Il a donc été constaté que le film selon l'invention présentait un bon compromis entre les propriétés mécaniques (faible allongement sous charge et faible retrait à la chaleur) et la tenue au feu, ainsi qu'une bonne aptitude au vieillissement UV.

## Revendications

1. Film souple multicouche (1) sensiblement transparent, comprenant une couche de polyester (PET) (3) intercalée entre deux couches de Poly(chlorure de vinyle) (PVC) (2) ignifugées, ledit film (1) étant **caractérisé en ce que**
chaque couche de PVC (2) comprend de 25 à 45% de plastifiant, en poids par rapport à son poids total, ledit plastifiant comprenant du phosphate, le taux de phosphore étant compris entre 0,3 et 1,0%, de préférence entre 0,4 et 0,8%, de façon encore plus préférée entre 0,5 et 0,7%, en poids par rapport au poids total de film souple.

2. Film souple multicouche (1) selon la revendication 1, tel que le polyester est le polyéthylène téréphtalate.

3. Film souple multicouche (1) selon l'une des revendications 1 ou 2, tel que la couche de PET (3) comporte une couche issue d'une couche de fonctionnalisation sur chacune de ses faces.

4. Film souple multicouche (1) selon l'une des revendications 1 à 3, tel que le phosphate comprend au moins un cycle aromatique.

5. Film souple multicouche (1) selon l'une des revendications 1 à 4, tel que chaque couche de PVC présente une épaisseur moyenne comprise entre 100 et 400 µm, de préférence entre 150 et 300 µm.

6. Film souple multicouche (1) selon l'une des revendications 1 à 5, tel que la couche de PET présente une épaisseur moyenne comprise entre 5 et 100 µm, de préférence entre 10 et 80 µm.

7. Film souple multicouche (1) selon l'une des revendications 1 à 6, tel que le film souple sensiblement transparent selon l'invention présente en général une épaisseur moyenne de 205 à 900 µm, de préférence de 310 à 660 µm.

8. Film souple multicouche (1) selon l'une des revendications 1 à 7, tel que le plastifiant est choisi parmi l'octyl diphenyl phosphate, le 2-éthylhexyl diphényl phosphate, le triphenyl phosphate, l'isopropylphényl diphényl phosphate, le 2-isopropyl-5-méthylcyclohexyl diphényl phosphite, et leurs mélanges.

9. Film souple multicouche (1) selon l'une des revendications 1 à 8, tel que le plastifiant comprend en outre au moins un phosphate linéaire comportant du chlore, de préférence choisi parmi le tris(2-chloroethyl) phosphate, le tris(1-chloro-2-propyl) phosphate, le tris(3-chloropropyl) phosphate et leurs mélanges.

10. Film souple multicouche (1) selon l'une des revendications 1 à 9, tel que le plastifiant comprend en outre au moins un composé choisi parmi le dioctyl adipate (DOA), le phtalate de diisononyle (DINP), le diisodécyl phtalate (DIDP), le dioctyltéréphtalate (DOTP), le di(2-propylheptyl) phtalate (DPHP), l'acide dicarboxylique de 1,2-cyclohexane (DINCH), le tris(2-éthylhexyl) trimellitate (TOTM), les plastifiants biosourcés, et leurs mélanges.

11. Film souple multicouche (1) selon l'une des revendications 1 à 10, tel que les deux couches de PVC sont semblables.

12. Procédé de fabrication d'un film souple multicouche (1) sensiblement transparent selon l'une des revendications 1 à 11, comprenant les étapes successives suivantes :
(a) assemblage de trois films formant couches, un film en polyester (PET) (3), présentant une couche de fonctionnalisation sur chacune de ses deux faces, étant intercalé entre deux films en Poly(chlorure de vinyle) (PVC) (2) ignifugés, ;
(b) chauffage de cet assemblage à une température comprise entre 130°C et 190°C-;
(c) calandrage (4) de l'assemblage des trois films chauffés, le pression de calandrage étant comprise entre 10 et 30.10⁵ Pa;
(d) refroidissement du film souple multicouche issu de l'étape (c).

13. Procédé de fabrication d'un film souple multicouche (1) sensiblement transparent selon la revendication 12, tel que la couche de fonctionnalisation comprend au moins un polymère, qui est de préférence un polyester ou un copolymère de polyester.

14. Procédé de fabrication d'un film souple multicouche (1) sensiblement transparent selon l'une des revendications 12 ou 13, tel que la couche de fonctionnalisation est d'épaisseur moyenne de 0,1 à 5 µm.

15. Structure modulaire comprenant au moins une paroi constituée au moins d'un film souple multicouche sensiblement transparent selon l'une des revendications 1 à 11.

## Patentansprüche

1. Weiche, mehrlagige, im Wesentlichen transparente Folie (1) mit einer Lage aus Polyester (PET) (3), die zwischen zwei feuerfesten Lagen aus Poly(vinylchlorid) (PVC) (2) angeordnet ist, wobei die Folie (1) **dadurch gekennzeichnet ist, dass** jede PVC-Lage (2) 25 bis 45 Gew.-% Weichmacher, im Verhältnis zu ihrem Gesamtgewicht, umfasst, wobei der Weichmacher Phosphat enthält und der Phosphorgehalt zwischen 0,3 und 1,0 %, vorzugsweise zwischen 0,4 und 0,8 %, noch bevorzugter zwischen 0,5 und 0,7 %, bezogen auf das Gesamtgewicht der weichen Folie, liegt.

2. Weiche, mehrlagige Folie (1) nach Anspruch 1, wobei es sich beim Polyester um Polyethylenterephthalat handelt.

3. Weiche, mehrlagige Folie (1) nach einem der Ansprüche 1 oder 2, wobei die PET-Lage (3) auf jeder ihrer Seiten eine Lage aus einer Funktionalisierungsschicht aufweist.

4. Weiche, mehrlagige Folie (1) nach einem der Ansprüche 1 bis 3, wobei das Phosphat mindestens einen aromatischen Ring umfasst.

5. Weiche, mehrlagige Folie (1) nach einem der Ansprüche 1 bis 4, wobei jede PVC-Lage eine durchschnittliche Dicke zwischen 100 und 400 µm, vorzugsweise zwischen 150 und 300 µm, aufweist.

6. Weiche, mehrlagige Folie (1) nach einem der Ansprüche 1 bis 5, wobei die PET-Lage eine durchschnittliche Dicke zwischen 5 und 100 µm, vorzugsweise zwischen 10 und 80 µm, aufweist.

7. Weiche, mehrlagige Folie (1) nach einem der Ansprüche 1 bis 6, wobei die erfindungsgemäße im Wesentlichen transparente weiche Folie im Allgemeinen eine durchschnittliche Dicke von 205 bis 900 µm, vorzugsweise von 310 bis 660 µm, aufweist.

8. Weiche, mehrlagige Folie (1) nach einem der Ansprüche 1 bis 7, wobei der Weichmacher ausgewählt ist aus Octyldiphenylphosphat, 2-Ethylhexyldiphenylphosphat, Triphenylphosphat, Isopropylphenyl-diphenylphosphat, 2-Isopropyl-5-methylcyclohexyl-diphenylphosphit und deren Gemischen.

9. Weiche, mehrlagige Folie (1) nach einem der Ansprüche 1 bis 8, wobei der Weichmacher zusätzlich mindestens ein lineares Phosphat mit Chlor umfasst, vorzugsweise ausgewählt aus Tris(2-chloroethyl)phosphat, Tris(1-chloro-2-propyl)phosphat, Tris(3-chloropropyl)phosphat und deren Gemischen.

10. Weiche, mehrlagige Folie (1) nach einem der Ansprüche 1 bis 9, wobei der Weichmacher zusätzlich mindestens eine Verbindung umfasst, die ausgewählt ist aus Dioctyladipat (DOA), Diisononylphthalat (DINP), Diisodecylphthalat (DIDP), Dioctylterephthalat (DOTP), Di(2-propylheptyl)phthalat (DPHP), 1,2-Cyclohexandicarbonsäure (DINCH), Tris(2-ethylhexyl)trimellitat (TOTM), biobasierten Weichmachern und deren Gemischen.

11. Weiche, mehrlagige Folie (1) nach einem der Ansprüche 1 bis 10, wobei die beiden PVC-Lagen ähnlich sind.

12. Verfahren zur Herstellung einer im Wesentlichen transparenten mehrlagigen Folie (1) nach einem der Ansprüche 1 bis 11, das folgende aufeinanderfolgende Schritte umfasst:
(a) Zusammenfügen von drei lagenbildenden Folien, wobei eine Polyester (PET)-Folie (3), die auf jeder ihrer beiden Seiten eine Funktionalisierungslage aufweist, zwischen zwei feuerfesten Polyvinylchlorid (PVC)-Folien (2) angeordnet ist;
(b) Erhitzen dieser Anordnung auf eine Temperatur zwischen 130°C und 190°C;
(c) Kalandrieren (4) der Anordnung von drei erhitzten Folien, wobei der Kalandrierdruck zwischen 10 und 30,10⁵ Pa liegt;
(d) Abkühlen der mehrlagigen weichen Folie aus Schritt (c).

13. Verfahren zur Herstellung einer im Wesentlichen transparenten mehrlagigen Folie (1) nach Anspruch 12, wobei die Funktionalisierungslage mindestens ein Polymer umfasst, das vorzugsweise ein Polyester oder ein Polyester-Copolymer ist.

14. Verfahren zur Herstellung einer im Wesentlichen transparenten mehrlagigen Folie (1) nach einem der Ansprüche 12 oder 13, wobei die Funktionalisierungslage eine durchschnittlichen Dicke von 0,1 bis 5 µm aufweist.

15. Modulare Struktur mit mindestens einer Wand, die aus mindestens einer mehrlagigen, im Wesentlichen transparenten, weichen Folie nach einem der Ansprüche 1 bis 11 besteht.

## Claims

1. Substantially transparent multilayer flexible film (1), comprising a polyester (PET) layer (3) sandwiched between two flame-retardant polyvinyl chloride (PVC) layers (2), said film (1) being **characterised in that**
each PVC layer (2) comprises 25 to 45% of plasticiser, by weight with respect to its total weight, said plasticiser comprising phosphate, the level of phosphorus being between 0.3 and 1.0%, preferably between 0.4 and 0.8%, even more preferably between 0.5 and 0.7%, by weight with respect to the total weight of flexible film.

2. Multilayer flexible film (1) according to claim 1, wherein the polyester is polyethylene teraphthalate.

3. Multilayer flexible film (1) according to any one of claims 1 or 2, wherein the PET layer (3) comprises a layer coming from a functionalisation layer on each of its faces.

4. Multilayer flexible film (1) according to any one of claims 1 to 3, wherein the phosphate comprises at least one aromatic cycle.

5. Multilayer flexible film (1) according to any one of claims 1 to 4, wherein each PVC layer has an average thickness of between 100 and 400µm, preferably between 150 and 300µm.

6. Multilayer flexible film (1) according to any one of claims 1 to 5, wherein the PET layer has an average thickness of between 5 and 100µm, preferably between 10 and 80µm.

7. Multilayer flexible film (1) according to any one of claims 1 to 6, wherein the substantially transparent flexible film according to the invention generally has an average thickness of 205 to 900µm, preferably of 3 10 to 660µm.

8. Multilayer flexible film (1) according to any one of claims 1 to 7, wherein the plasticiser is chosen from among octyl diphenyl phosphate, 2-ethylhexyl diphenyl phosphate, triphenyl phosphate, isopropylphenyl diphenyl phosphate, 2-isopropyl-5-methylcyclohexyl diphenyl phosphite, and mixtures thereof.

9. Multilayer flexible film (1) according to any one of claims 1 to 8, wherein the plasticiser further comprises at least one linear phosphate comprising chlorine, preferably chosen from among tris(2-chloroethyl) phosphate, tris(1-chloro-2-propyl) phosphate, tris(3-chloropropyl) phosphate, and mixtures thereof.

10. Multilayer flexible film (1) according to any one of claims 1 to 9, wherein the plasticiser further comprises at least one compound chosen from among dioctyl adipate (DOA),diisononyle phthalate (DINP), diisodecyl phthalate (DIDP), dioctylterephthalate (DOTP), di(2-propylheptyl) phthalate (DPHP), 1,2-cyclohexane dicarboxylic acid (DINCH), tris(2-ethylhexyl) trimellitate (TOTM), biosourced plasticisers, and mixtures thereof.

11. Multilayer flexible film (1) according to any one of claims 1 to 10, wherein the two PVC layers are similar.

12. Method for producing a substantially transparent multilayer flexible film (1) according to one of claims 1 to 11, comprising the following successive steps:
(a) assembly of three films forming layers, a polyester (PET) film, having a functionalisation layer on each of its two faces, being sandwiched between two flame-retardant polyvinyl chloride (PVC) (2) films;
(b) heating of this assembly at a temperature of between 130°C and 190°C;
(c) calendering (4) of the assembly of the three heated layers, the calendering pressure being between 10 and 30.10⁵Pa;
(d) cooling of the multilayer flexible film coming from step (c).

13. Method for producing a substantially transparent multilayer flexible film (1) according to claim 12, wherein the functionalisation layer comprises at least one polymer, which is preferably a polyester or a polyester copolymer.

14. Method for producing a substantially transparent multilayer flexible film (1) according to any one of claims 12 or 13, wherein the functionalisation layer is of average thickness of 0.1 to 5µm.

15. Modular structure comprising at least one wall constituted at least of one substantially transparent multilayer flexible film, according to any one of claims 1 to 11.
